# EUROPEAN PATENT APPLICATION

(11) **EP 4 046 835 A1**
(43) Date of publication of application: **24.08.2022**
(21) Application number: 20874165.2
(22) Date of filing: 10.10.2020
(51) Int. Cl.: B60H 1/34

(54) **AIR OUTLET STRUCTURE**

(30) Priority: 10.10.2019 CN 201910960428; 10.10.2019 CN 201910959788
(71) Applicant: Shanghai Yanfeng Jinqiao Automotive Trim Systems Co., Ltd., Shanghai 201206 (CN)
(72) Inventor: WANG, Liluo, Shanghai 201206 (CN)
(74) Representative: Trinks, Ole
(86) International application number: PCT/CN2020/120209
(87) International publication number: WO 2021/068940

(57) **Abstract**

The invention relates to an air outlet structure comprising a dial lever assembly and front and rear rows of blades which are arranged on a housing. One of the front and rear rows of blades is controlled by shifting the dial lever assembly up and down, and the other one of the front and rear rows of blades is controlled by rotating the dial lever assembly. The opening and closing of front and rear rows of blades are independently controlled by different actions of the dial lever. Preferably, the opening and closing of an air door can also be independently controlled. For example, the horizontal blades of the front row of blade assemblies rotate up and down by shifting a dial lever assembly up and down, the perpendicular blades of the rear row of blade assemblies rotate left and right by rotating the dial lever assembly, and the opening and closing of the air door are realized by plugging and unplugging the dial lever assembly, which not only does not affect each other, but also achieves a compact arrangement of the space.

## Description

### Technical Field

The invention relates to the field of vehicle interior, in particular to an air outlet structure.

### Background Art

Currently, there is an increasing demand for motor vehicles, and it is increasingly personalized at the same time. For example, for various components and devices present within a vehicle compartment, it may be desirable to be able to perform additional functions or effects in addition to their original functions, such as air conditioning within the vehicle compartment.

To this end, the motor vehicle has an air conditioning system for heating or cooling air and supplying the heated or cooled air to the interior space of the vehicle compartment through an air outlet structure.

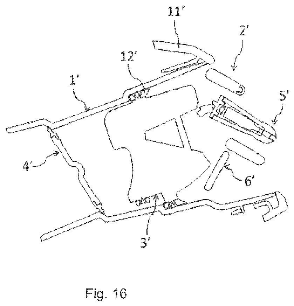

FIGURE 16 shows a conventional outlet structure comprising a housing 1', a horizontal blade assembly 2', a perpendicular blade 3' and an air door 4', wherein the horizontal blade assembly 2' is installed at the front end of the housing 1' by a panel 11', the perpendicular blade 3' is installed at the middle of the housing 1' by a support 12', and the air door 4' is installed at the rear end of the housing 1'. In addition, a toggle button 5' is installed on one blade in the middle of the horizontal blade assembly 2', the toggle button 5' can drive the rotation of horizontal blade assembly 2' by toggling upwards and downwards, the toggle button 5' can drive the rotation of the perpendicular blade 3' by toggling leftwards and rightwards, and the air door 4' is opened and closed by another structure.

Obviously, since the perpendicular blade 3' is driven by the leftward and rightward toggling of the toggle button 5', this results in a need for a large arrangement space, which is not applicable to a spatially limited environment. In addition, since the toggle button 5' is installed on one blade in the middle of the horizontal blade assembly 2', this structure occupies a certain space and can shield the air blowing and influence the air blowing effect.

In addition, as shown in FIGURE 16, since the air outlet is narrow, the air outlet structure further comprises a follow-up blade 6' installed on a hidden blade to optimize the air guiding effect. In general, in order to arrange the follow-up blade 6', the front end of the perpendicular blade 3' needs to be partially cut away, thus affecting the air guidance of the perpendicular blade 3'. In order to avoid cutting away a large part of the perpendicular blade 3', it is usually also necessary to move the perpendicular blade 3' back in its entirety, which in turn requires an increase in the space of the housing and causes inapplicability for spatially limited environment.

### Summary of the Invention

In order to solve the problems that an air outlet structure in the prior art needs large installation space and the like, the invention provides an air outlet structure.

An air outlet structure provided in accordance with one aspect of the present invention provides a channel for air flow and comprises (a) a housing (b) a vertical guide configured to guide the air flow; (c) a horizontal guide configured to guide the air flow; and (d) a dial lever assembly configured to move the vertical guide and the horizontal guide; wherein the dial lever assembly is configured to move the vertical guide between left and right positions; the dial lever assembly is configured to move the horizontal guide between upper and lower positions; the dial lever assembly is configured to (1) move the horizontal guide by rotating relative to the housing about a first axis parallel to an extension direction of the horizontal guide, and (2) move the vertical guide by rotating relative to the housing about a second axis perpendicular to both the extension direction of the horizontal guide and the extension direction of the vertical guide.

Preferably, the air outlet structure further comprises an air door configured to move between a closed position closing the channel and an open position allowing the air flow therethrough.

Preferably, the dial lever assembly is configured such that the horizontal guide and the vertical guide are configured to remain in a position relative to the housing when the air door moves between the closed position and the open position.

Preferably, the dial lever assembly is configured to translate in the direction of the second axis relative to the housing so as to move the air door between the closed position and the open position.

Preferably, the dial lever assembly comprises a blade dial lever configured to move the vertical guide by rotating about the second axis relative to the housing and an air door dial lever configured to move the air door by rotating about the second axis relative to the housing.

Preferably, the vertical guide is configured as one of front and rear rows of blades, wherein the horizontal guide is configured as the other one of the front and rear rows of blades.

Preferably, the dial lever assembly comprises an up-down toggle sleeve and a rotary sleeve, wherein the up-down toggle sleeve is rotatably mounted on the housing about a first direction, and one of the front and rear rows of blades is connected with the up-down toggle sleeve; and the rotary sleeve is rotatable about a second direction relative to the up-down toggle sleeve, the second direction is perpendicular to the first direction, and the other one of the front and rear rows of blades is connected with the rotary sleeve.

Preferably, the rotary sleeve passes through the up-down toggle sleeve and has only a degree of freedom to rotate about the second direction relative to the up-down toggle sleeve.

Preferably, one of the front and rear rows of blades is connected with the up-down toggle sleeve by a first blade drive gear, one of the front and rear rows of blade assemblies has a first blade drive link with a shaft, and one end of the first blade drive gear is connected with the shaft; and the up-down toggle sleeve has a first tooth, and the other end of the first blade drive gear is engaged with the first tooth.

Preferably, the other one of the front and rear rows of blades is connected with the rotary sleeve by a ball socket structure, and the other one of the front and rear rows of blade assemblies is provided with a second blade drive link; the second blade drive link has a ball socket, and the rotary sleeve has a ball head; alternatively, the second blade drive link has a ball head, and the rotary sleeve has a ball socket; and the ball head is received in the ball socket.

Preferably, the air outlet structure further comprises an air door controlled by plugging and unplugging the dial lever assembly.

Preferably, the dial lever assembly further comprises a dial lever connected with the air door by passing through the rotary sleeve.

Preferably, the dial lever has only a degree of freedom to move in the second direction relative to the rotary sleeve.

Preferably, the wall surface of the rotary sleeve is provided with an opening groove extending forwards and backwards, and the dial lever has a pin which is movable in the opening groove.

Preferably, the dial lever assembly comprises an up-down toggle sleeve rotatably mounted on the housing about a first direction, and one of the front and rear rows of blades is connected with the up-down toggle sleeve; and the blade dial lever is rotatable about a second direction relative to the up-down toggle sleeve, the second direction is perpendicular to the first direction, and the other one of the front and rear rows of blades is connected with the blade dial lever.

Preferably, the blade dial lever passes through the up-down toggle sleeve and has only a degree of freedom to rotate relative to the up-down toggle sleeve.

Preferably, one of the front and rear rows of blades has a first blade drive link and is connected with the up-down toggle sleeves by a first blade drive gear, and the first blade drive link has a shaft with which one end of the first blade drive gear is connected; and the up-down toggle sleeve has a first tooth, and the other end of the first blade drive gear is engaged with the first tooth.

Preferably, the other one of the front and rear rows of blades has a second blade drive link and is connected with the blade dial lever by a ball socket structure; the second blade drive link has a ball socket, and the blade dial lever has a ball head; alternatively, the second blade drive link has a ball head, and the blade dial lever has a ball socket; and the ball head is received in the ball socket.

Preferably, the air outlet structure comprises an air door, the dial lever assembly comprises an air door dial lever inserted into the blade dial lever, and the air door is controlled by rotating the air door dial lever.

Preferably, the air door dial lever has only a degree of freedom to rotate relative to the blade dial lever.

Preferably, the air door dial lever is connected with the air door by a worm.

Preferably, one of the air door dial lever and the worm is provided with a ball socket, the other one is provided with a ball head, and a convex point on the ball head is matched with a groove on the ball socket, so that the air door dial lever drives the rotation of the worm.

According to another aspect of the present invention, there is provided an air outlet structure including a dial lever assembly, a front row of blade assembly and a rear row of blade assembly mounted on a housing, wherein a blade of one of the front row of blade assembly and the rear row of blade assembly is driven by shifting the dial lever of the dial lever assembly up and down, and a blade of the other one of the front row of blade assembly and the rear row of blade assembly is driven by rotating the dial lever of the dial lever assembly.

According to the air outlet structure provided by the invention, since the blade assembly is driven by the up-down toggle and rotation of the dial lever, without the need to be driven by the conventional left-and-right shifting, the installation space can be greatly saved, and the blade assembly is suitable for limited installation environment.

Preferably, the housing comprises a partition wall, and the front and rear rows of blade assemblies and the dial lever assembly are mounted on opposite sides of the partition wall, respectively.

According to the air outlet structure, due to the fact that the dial lever assembly is positioned on the side surfaces of the front row of blade assembly and the rear row of blade assembly, the air blowing is prevented from being shielded, and therefore the air blowing effect is not influenced by the arrangement of the dial lever assembly.

In a preferred embodiment, the front row of blade assembly is a horizontal blade assembly, and the rear row of blade assembly is a perpendicular blade assembly. Of course, it is also possible to provide the front row of blade assembly as a perpendicular blade assembly, and the rear row of blade assembly as a horizontal blade assembly. It should be understood that the front row of blades of the front row of blade assembly and the rear row of blades of the rear row of blade assembly may be perpendicular to each other or may form an included angle with each other, as desired.

Preferably, the front row of blade assembly comprises at least one front row blade rotatably connected to the housing and a front row blade drive link connected to the front row of blades, and the front row blade drive link is connected to the dial lever assembly to drive rotation of the front row of blades by the dial lever assembly.

Preferably, the dial lever assembly comprises an up-down toggle sleeve and a horizontal blade drive gear which are mounted on the housing (partition wall) and are meshed with each other, the up-down toggle sleeve is sleeved on the dial lever and has a degree of freedom to shift up and down synchronously with the dial lever but is irrelevant to the rotation of the dial lever, and the horizontal blade drive gear is connected with the front row blade drive link to drive the rotation of the front row of blades.

Preferably, the rear row of blade assembly comprises a rear row of blade drum rotatably connected to the housing, at least one rear row blade rotatably mounted on the rear row of blade drum, and a rear row blade drive link connected to the rear row of blades; and the rear row blade drive link is connected to the dial lever assembly to drive rotation of the rear row of blades by the dial lever assembly, and the rear row of blade drum and the front row of blade assembly are driven synchronously.

According to the air outlet structure, the rear row of blades can rotate on the housing along with the rear row blade drum besides rotating on the rear row blade drum, and can be used for replacing the follow-up blades in the prior art to optimize the air guiding effect. Therefore, the rear row of blades of the air outlet structure do not need to be cut off and moved backwards, so that the installation space can be greatly saved, and the air outlet structure is suitable for limited installation environment.

Preferably, the dial lever assembly further comprises a vertical drum connecting gear mounted on the housing (partition wall) and connected to the rear row blade drum, the vertical drum connecting gear is connected to a driving structure (horizontal blade drive gear) of the front row of blade assembly by a vertical drum conversion gear to synchronously drive the front row of blade assembly and the rear row blade drum (rotation of the front row of blades and the rear row blade drum).

Preferably, the dial lever assembly comprises a rotary sleeve sleeved on the dial lever and having a degree of freedom to synchronously shift up and down and synchronously rotate with the dial lever, and the rotary sleeve has a ball head received in a ball socket structure of the rear row blade drive link.

Preferably, the air outlet structure comprises an air door assembly, wherein the air door assembly is driven by plugging and unplugging a dial lever of the dial lever assembly.

Compared with the prior art that the opening and closing of the air door are realized by another structure, it is realized by the plugging and unplugging the dial lever in the invention, so that the driving of the horizontal blade assembly, the perpendicular blade assembly and the air door can be realized by the dial lever, and the installation space and cost are saved.

Preferably, the air door assembly comprises at least one air door rotatably connected to the housing, an air door tooth bar connected to the air door to drive the air door to rotate, and an air door drive link connected to the air door tooth bar; and the air door drive link is connected to the dial lever assembly to drive the opening and closing of the air door by the dial lever assembly.

Preferably, the rear end of the dial lever has a ball socket structure that receives the ball head of the air door drive link.

Preferably, the air door assembly comprises first and second air doors connected pivotally and having first and second gears facing each other respectively, with an air door tooth bar interposed between the first and second gears and having oppositely disposed first and second tooth bars engaged with the first and second gears to thereby rotate the first and second air doors by movement of the air door tooth bar.

According to the air outlet structure provided by the invention, the opening and closing of the front and rear rows of blades are independently controlled by different actions of the dial lever. Preferably, the opening and closing of an air door can also be independently controlled. For example, the horizontal blades of the front row of blade assemblies rotate up and down by shifting a dial lever assembly up and down, the perpendicular blades of the rear row of blade assemblies rotate left and right by rotating the dial lever assembly, and the opening and closing of the air door are realized by plugging and unplugging the dial lever assembly, which not only does not affect each other, but also achieves a compact arrangement of the space.

### Brief Description of the Drawings

FIGURE 1A is a schematic perspective view of a vehicle according to an exemplary embodiment.
FIGURE 1B is a schematic perspective view of a vehicle illustrating vehicle inside according to an exemplary embodiment.
FIGURE 2A is an integral structure schematic view of an air outlet structure according to Embodiment 1 of the invention.
FIGURE 2B is an exploded view of FIGURE 2A.
FIGURE 3A is a front view of an air outlet structure of FIGURE 2A showing horizontal blades in an upper position.
FIGURE 3B is a front view of the air outlet structure of FIGURE 2A showing horizontal and perpendicular blades in respective intermediate positions.
FIGURE 3C is a front view of the air outlet structure of FIGURE 2A showing the horizontal blades in a lower position.
FIGURE 3D is a front view of the air outlet structure of FIGURE 2A showing the perpendicular blades in a left position.
FIGURE 3E is a front view of the air outlet structure of FIGURE 2A showing the horizontal blades in a right position.
FIGURE 4A is a schematic view showing the connection relationship between a horizontal blade assembly and a partition wall of FIGURE 2B.
FIGURE 4B is a schematic view of an assembly structure of FIGURE 4A.
FIGURE 5A is a schematic view showing the connection relationship between a perpendicular blade assembly and a partition wall of FIGURE 2B.
FIGURE 5B is a schematic view of an assembly structure of FIGURE 5A.
FIGURE 6A is a schematic view of the connection relationship between an air door assembly of FIGURE 2B.
FIGURE 6B is a schematic view of an assembly structure of FIGURE 6A.
FIGURE 7A is a schematic view of the connection relationship between a dial lever assembly and a partition wall of FIGURE 2B.
FIGURE 7B is a schematic view of an assembly structure of FIGURE 7A.
FIGURE 8 is a structurally schematic view of an up-down toggle sleeve of FIGURE 7A.
FIGURE 9 is a structurally schematic view of a rotary sleeve of FIGURE 7A.
FIGURE 10 is a cross-sectional view of a dial lever assembly taken along line L-L of FIGURE 13 A.
FIGURES 11A-11B are schematic views of the internal structure of an air outlet structure of FIGURE 2A, showing perpendicular blades in the left and right positions, respectively, when horizontal blades are in the intermediate position and an air door is in the open position.
FIGURES 11C-11D are schematic views of the internal structure of the air outlet structure of FIGURE 2A, showing the horizontal blades in the upper and lower positions, respectively, when the perpendicular blades are in the intermediate position and the air door is in the open position.
FIGURES 11E-11F are schematic views of the internal structure of the air outlet structure of FIGURE 2A, showing the air door in a blocking position and an open position when the horizontal and perpendicular blades are in intermediate positions, respectively.
FIGURES 12A-12C are cross-sectional views of horizontal blades in an upper position, a middle position, and a lower position, respectively.
FIGURES 13A-13C are cross-sectional views of perpendicular blades in a left position, a middle position and a right position, respectively.
FIGURES 14A-14C are cross-sectional views of horizontal blades in an upper position, a middle position, and a lower position, respectively, illustrating the meshing relationship of teeth in a dial lever assembly.
FIGURES 15A-15B are cross-sectional views of an air door in a blocking position and an open position, showing the connection relationship between a ball head and a ball socket in a dial lever assembly.
FIGURE 16 is a cross-sectional view of an air outlet structure in the prior art.
FIGURE 17A is an integral structure schematic view of an air outlet structure according to Embodiment 2 of the invention.
FIGURE 17B is an exploded view of FIGURE 17A.
FIGURE 18A is a front view of an air outlet structure of FIGURE 17A showing horizontal blades in an upper position.
FIGURE 18B is a front view of the air outlet structure of FIGURE 17A showing horizontal and perpendicular blades in respective intermediate positions.
FIGURE 18C is a front view of the air outlet structure of FIGURE 17A showing the horizontal blades in a lower position.
FIGURE 18D is a front view of the air outlet structure of FIGURE 17A showing the perpendicular blades in a left position.
FIGURE 18E is a front view of the air outlet structure of FIGURE 17A showing the horizontal blades in a right position.
FIGURE 19A is a schematic view showing the connection relationship between a horizontal blade assembly and a partition wall of FIGURE 17B.
FIGURE 19B is a schematic view of an assembly structure of FIGURE 19A.
FIGURE 20A is a schematic view showing the connection relationship between a perpendicular blade assembly and a partition wall of FIGURE 17B.
FIGURE 20B is a schematic view of an assembly structure of FIGURE 20A.
FIGURE 21A is a schematic view of the connection relationship between an air door assembly of FIGURE 17B.
FIGURE 21B is a schematic view of an assembly structure of FIGURE 21A.
FIGURE 22A is a schematic view of the connection relationship between a dial lever assembly and a partition wall of FIGURE 17B.
FIGURE 22B is a schematic view of an assembly structure of FIGURE 22A.
FIGURE 23 is a structurally schematic view of an up-down toggle sleeve of FIGURE 22A.
FIGURE 24 is a structurally schematic view of a blade dial lever of FIGURE 22A.
FIGURE 25 is a cross-sectional view of a dial lever assembly taken along line L-L of FIGURE 28A.
FIGURES 26A-26B are schematic views of the internal structure of an air outlet structure of FIGURE 17A, showing perpendicular blades in the left and right positions, respectively, when horizontal blades are in the intermediate position and an air door is in the open position.
FIGURES 26C-26D are schematic views of the internal structure of the air outlet structure of FIGURE 17A, showing the horizontal blades in the upper and lower positions, respectively, when the perpendicular blades are in the intermediate position and the air door is in the open position.
FIGURES 26E-26F are schematic views of the internal structure of the air outlet structure of FIGURE 17A, showing the air door in a blocking position and an open position when the horizontal and perpendicular blades are in intermediate positions, respectively.
FIGURES 27A-27C are cross-sectional views of horizontal blades in an upper position, a middle position, and a lower position, respectively.
FIGURES 28A-28C are cross-sectional views of perpendicular blades in a left position, a middle position and a right position, respectively.
FIGURES 29A-29C are cross-sectional views of horizontal blades in an upper position, a middle position, and a lower position, respectively, illustrating the meshing relationship of teeth in a dial lever assembly.

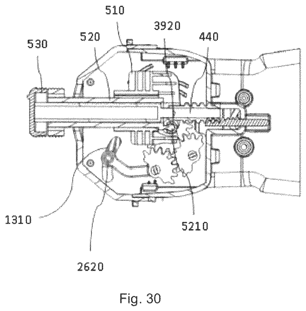

FIGURE 30 is a cross-sectional view of an air outlet structure according to Embodiment 2 of the invention, showing the connection relationship between a ball head and a ball socket in a dial lever assembly.

### Detailed Description of the Invention

The preferred embodiments of the present invention are given below in conjunction with the drawings and described in detail.

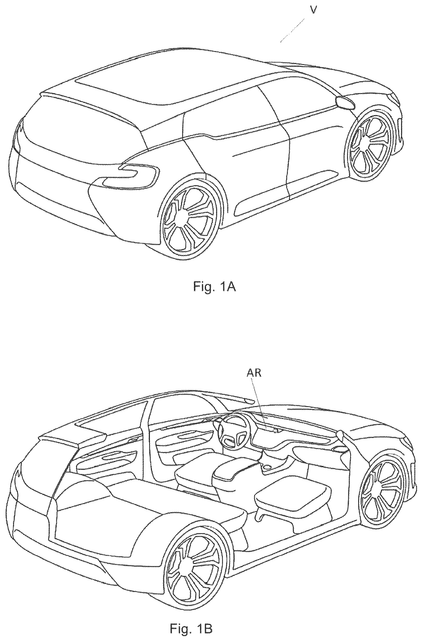

As schematically illustrated in the exemplary embodiments of FIGURES 1A-1B, a vehicle V may provide internal components including an air outlet structure AR.

### 1. Embodiment 1

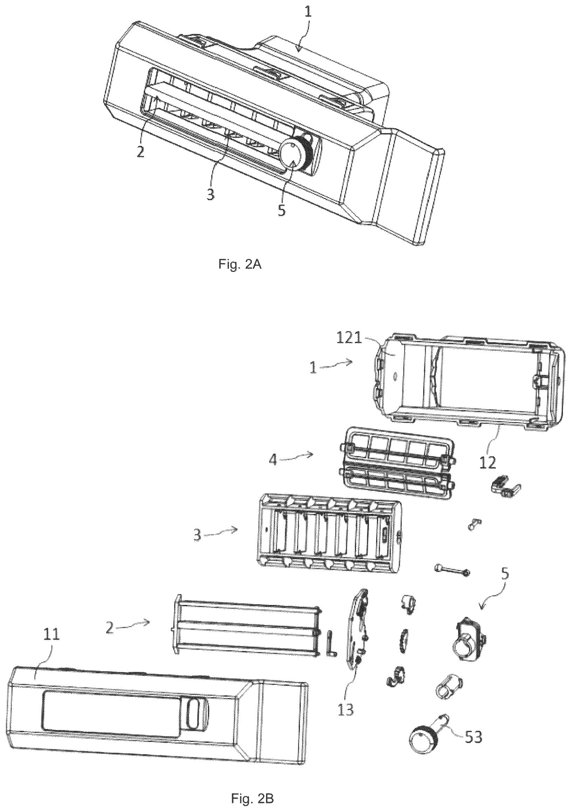

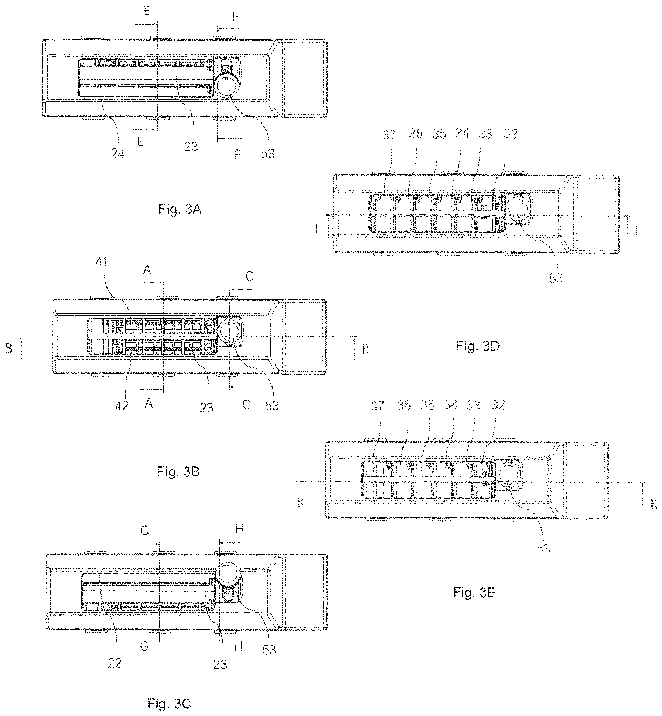

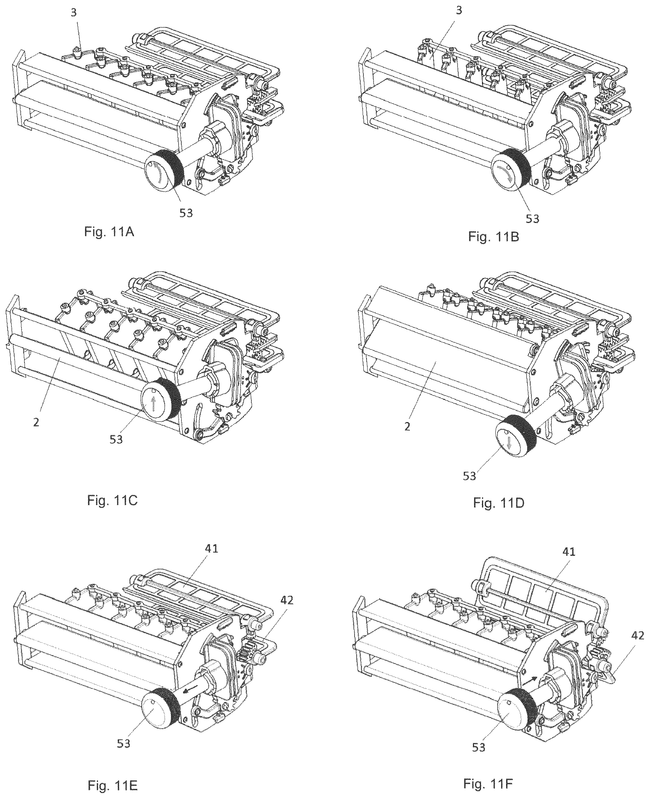

As shown in FIGURES 2A-2B, the air outlet structure AR according to the present invention comprises a housing 1, a horizontal blade assembly 2, a perpendicular blade assembly 3, an air door assembly 4, and a dial lever assembly 5, wherein the horizontal blade assembly 2 is installed at the front end of the housing 1, the perpendicular blade assembly 3 is installed at the middle of the housing 1, and the air door assembly 4 is installed at the rear end of the housing 1. A dial lever assembly 5, which is installed on the housing 1 at the sides of the horizontal blade assembly 2 and the perpendicular blade assembly 35 comprises a dial lever 53, wherein the up-down toggle of the dial lever 53 can drive the rotation of the horizontal blade of the horizontal blade assembly 2 (shown in FIGURES 3A-3C and FIGURES 11C-11D), and the rotation of the dial lever 53 can drive the rotation of the perpendicular blade of the perpendicular blade assembly 3 (shown in FIGURES 3D-3E and FIGURES 11A-11B); and the plugging and unplugging of the dial lever 53 may drive the opening and closing of the air door of the air door assembly 4 (as shown in FIGURES 11E-11F).

As shown in FIGURE 2B, the housing 1 comprises a front half-housing 11 and a rear half-housing 12, which are relatively fixed, e.g. by means of a circumferential snap, and define a receiving cavity for receiving the horizontal blade assembly 2, the perpendicular blade assembly 3, the air door assembly 4 and at least part of the dial lever assembly 5. In this embodiment, the housing 1 further includes a partition wall 13 fixedly provided between the front half-housing 11 and the rear half-housing 12 and dividing the receiving cavity into a left cavity in which the horizontal blade assembly 2 and the perpendicular blade assembly 3 are received and a right cavity in which at least part of the dial lever assembly 5 is received.

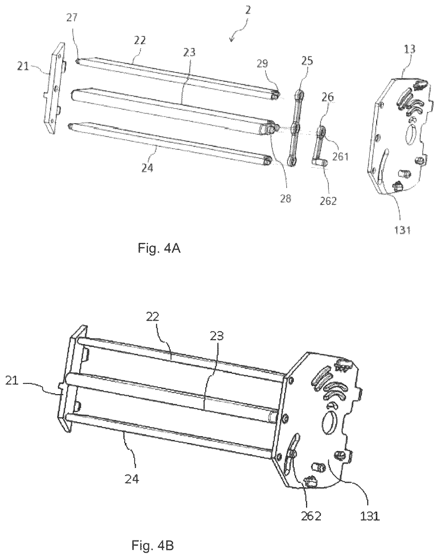

As shown in FIGURES 4A-4B, the horizontal blade assembly 2 includes a horizontal blade support 21 and a plurality of horizontal blades 22, 23, 24, wherein each of the horizontal blades 22, 23, 24 includes a left-side shaft 27 on the left side and a right-side shaft 28 and a link shaft 29 on the right side. The left-side shaft 27 and the right-side shaft 28 are coaxial and closer to the outer side of the air outlet opening than the link shaft 29. The left-side shaft 27 of the horizontal blades 22, 23, 24 is fitted to the horizontal blade support 21 fixed to the housing 1, and the right-side shaft 28 is fitted to the partition wall 13. In addition, the horizontal blade assembly 2 further includes a horizontal blade linkage link 25 that is simultaneously fitted to the link shaft 29 of the horizontal blades 22, 23, 24 to effect linkage of the three horizontal blades 22, 23, 24 (see FIGURES 3A-3C and FIGURES 11C-11D). In addition, the horizontal blade assembly 2 further includes a horizontal blade drive link 26, one end of which is provided with a hole 261 for fitting to the link shaft 29 of the horizontal blade 23 passing through the horizontal blade linkage link 25; the other end thereof is provided with a shaft 262 which passes through a first slide groove 131 of the partition wall 13 and is fitted to the dial lever assembly 5 (see FIGURE 4B), where by the rotation of the horizontal blades 22, 23, 24 is driven by the dial lever assembly 5.

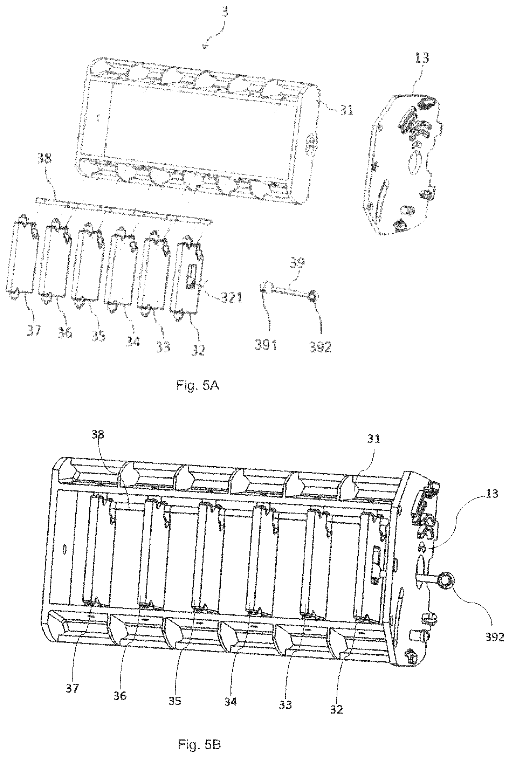

As shown in FIGURES 5A-5B, the perpendicular blade assembly 3 includes a perpendicular blade drum 31 and a plurality of perpendicular blades 32, 33, 34, 35, 36, 37, the perpendicular blade drum 31 has a left-side shaft fitted to a left side wall 121 (see FIGURE 2B) of the rear half-housing 12, and a right-side shaft fitted to the partition wall 13, and both ends of the perpendicular blades 32, 33, 34, 35, 36, 37 are shaft-fitted to the perpendicular blade drum 31. In addition, the perpendicular blade assembly 3 further includes a perpendicular blade linkage link 38 that is simultaneously connected with the perpendicular blades 32, 33, 34, 35, 36, 37 to effect linkage of the six perpendicular blades 32, 33, 34, 35, 36, 37 (see FIGURES 3D-3E and FIGURES 11A-11B). Furthermore, the perpendicular blade assembly 3 further includes a perpendicular blade drive link 39 having a ball socket 391 at the left end thereof fitted to the ball head 321 of the closest perpendicular blade 32 such that the perpendicular blade drive link 39 can pull the perpendicular blade 32 or rotate relative to the perpendicular blade 32, and a ball socket 392 at the right end thereof fitted to the dial lever assembly 5 to thereby drive the rotation of the perpendicular blades 32, 33, 34, 35, 36, 37 by the dial lever assembly 5.

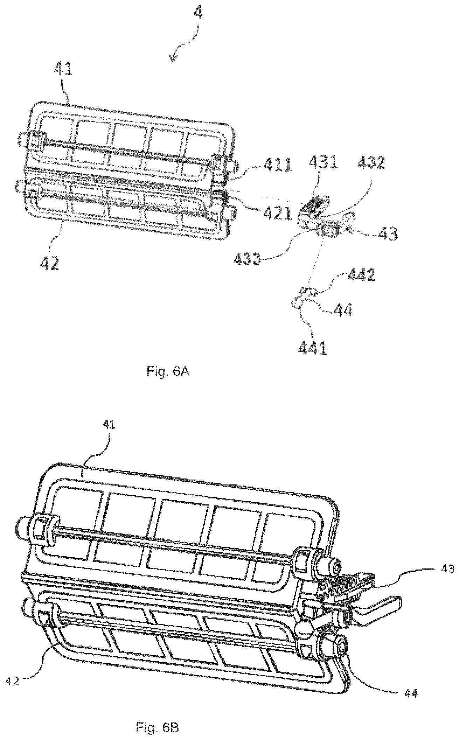

As shown in FIGURES 6A to 6B, the air door assembly 4 includes a first air door 41, a second air door 42 and an air door tooth bar 43, wherein left and right sides of the first and second air doors 41 and 42 are respectively shaft-fitted to side walls of the rear half-housing 12, and the first and second air doors 41 and 42 are pivotably connected and have first and second gears 411 and 421, respectively, facing each other; and the air door tooth bar 43 is inserted between the first gear 411 and the second gear 421 and has an upper tooth bar 431 and a lower tooth bar 432 oppositely arranged to cooperate with the first gear 411 and the second gear 421, respectively, so that the first air door 41 and the second air door 42 are rotated by the movement of the air door tooth bar 43 (see FIGURES 11E-11F). In addition, the air door assembly 4 further comprises an air door drive link 44, and a shaft rod 442 at one end of the air door drive link 44 is connected with a shaft hole 433 on the air door tooth bar 43, so that the air door drive link 44 can pull the air door tooth bar 43 or deflect upwards and downwards relative to the air door tooth bar 43; the ball 441 at the other end of the air door drive link 44 is fitted to the dial lever assembly 5, where by the rotation of the first air door 41 and the second air door 42 is driven by the dial lever assembly 5.

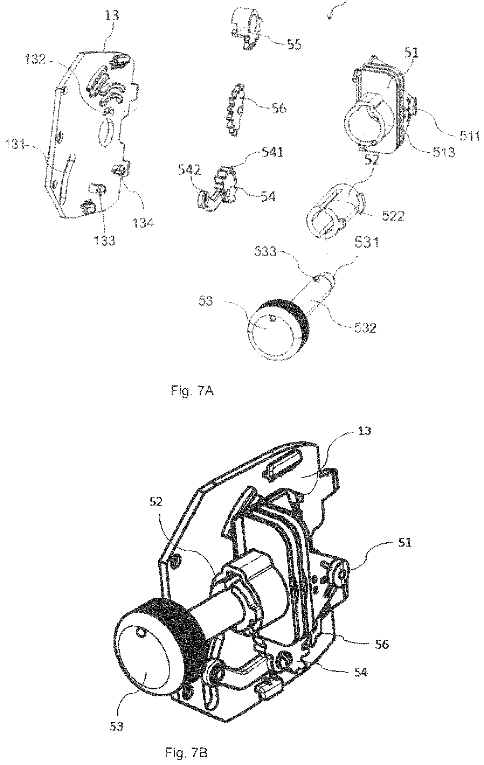

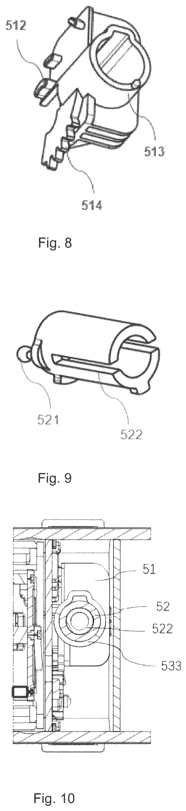

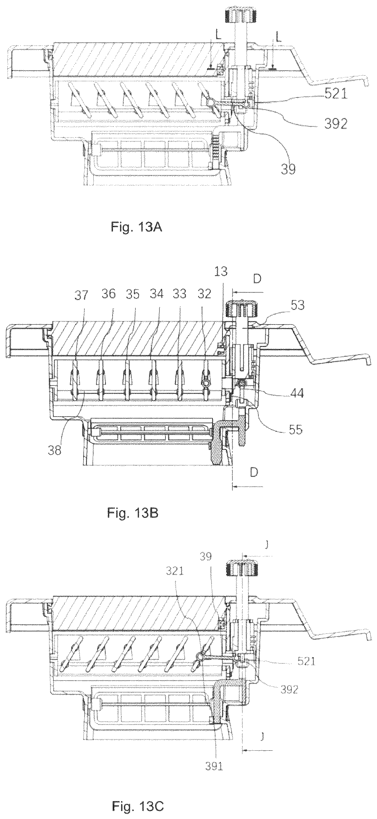

As shown in FIGURES 7A-7B, the dial lever assembly 5 includes an up-down toggle sleeve 51, a rotary sleeve 52 and a dial lever 53, wherein the right end of the up-down toggle sleeve 51 is connected with the rear half-housing 12 (see FIGURE 2B) by a rotating shaft 511, and the left end thereof is provided with a pin 512 and a first tooth 514 (see FIGURE 8); and the pin 512 is inserted into a second slide groove 132 of the partition wall 13, so that upper and lower toggle sleeves 51 can rotate about the rotation shaft 511. The rotary sleeve 52 passes through a sleeve 513 of the up-down toggle sleeve 51 in the forward and backward directions, and the rotary sleeve 52 has only a degree of freedom to rotate relative to the up-down toggle sleeve 51; and the rear end of the rotary sleeve 52 has a ball head 521 (see FIGURE 9) which is received in a ball socket 392 at the right end of the perpendicular blade drive link 39 (see FIGURES 5A, 13A and 13C), thereby achieving that the dial lever assembly 5 drives the rotation of the perpendicular blades 32, 33, 34, 35, 36, 37. The shaft 532 of the dial lever 53 passes through the rotary sleeve 52 axially along the forward and backward directions and is inserted into an open groove 522 of the wall surface of the rotary sleeve 52 through the pin 533 on the shaft 532 (refer to FIGURE 10), so that the dial lever 53 has only a degree of freedom to move forwards and backwards relative to the rotary sleeve 52 (refer to FIGURES 11E-11F); and the rear end of the shaft 532 is further provided with a ball socket 531 for receiving the ball head 441 of the air door drive link 44, thereby achieving that the dial lever assembly 5 drives the rotation of the first air door 41 and the second air door 42. Thus, the rotation of the dial lever 53 is kept synchronous with the rotation of the rotary sleeve 52, the up-down toggle of the dial lever 53 is kept synchronous with the up-down toggle of the up-down toggle sleeve 51, and the plugging and unplugging of the dial lever 53 is kept independent from the up-down toggle sleeve 51 and the rotary sleeve 52 (i.e. not influenced from each other).

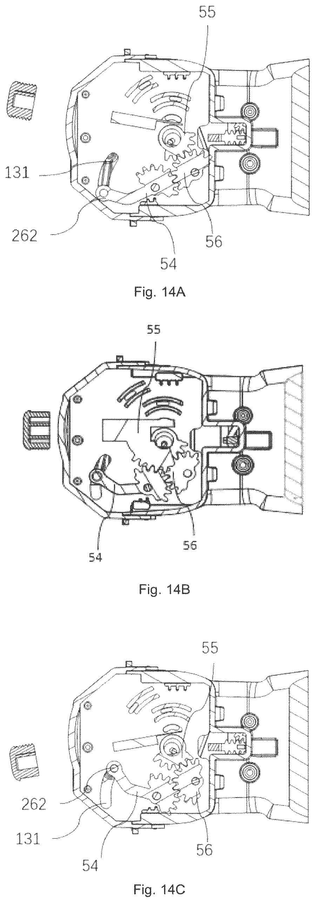

As shown in FIGURE 7A, the dial lever assembly 5 further includes a horizontal blade drive gear 54 rotatably fitted on a corresponding mounting shaft 133 of the partition wall 13. Specifically, the rear end of the horizontal blade drive gear 54 has a second tooth 541 engaged with the first tooth 514 (see FIGURE 8) positioned on the up-down toggle sleeve 51, the front end of the horizontal blade drive gear 54 has a receiving hole 542, and a shaft 262 of the horizontal blade drive link 26 passes through the first slide groove 131 on the partition wall 13 and is inserted into and fits with a receiving hole 542 (see FIGURE 7A) so as to drive the rotation of the horizontal blade drive gear 54 by moving up and down the up-down toggle sleeve 51, and then transmit the motion to the horizontal blade linkage link 25 through the shaft 262 of the horizontal blade drive link 26, thereby driving the rotation of the horizontal blades 22, 23, 24. The dial lever assembly 5 further includes a vertical drum connecting gear 55 connected with the perpendicular blade drum 31 through the partition wall 13 (see FIGURE 7A) partially and a vertical drum conversion gear 56 rotatably fitted on a corresponding mounting shaft 134 of the partition wall 13; the vertical drum conversion gear 56 is engaged with the second tooth 541 of the horizontal blade drive gear 54, and the vertical drum connecting gear 55 is in turn engaged with the vertical drum conversion gear 56 (see FIGURES 7A and 14A-14C), so that the rotation of the vertical drum conversion gear 56, the rotation of the vertical drum connecting gear 55, and finally the rotation of the perpendicular blade drum 31 can be driven by the rotation of the horizontal blade drive gear 54. In particular, by the arrangement of the vertical drum conversion gear 56, the rotation direction of the perpendicular blade drum 31 is opposite to the rotation direction of the horizontal blades 22, 23, 24.

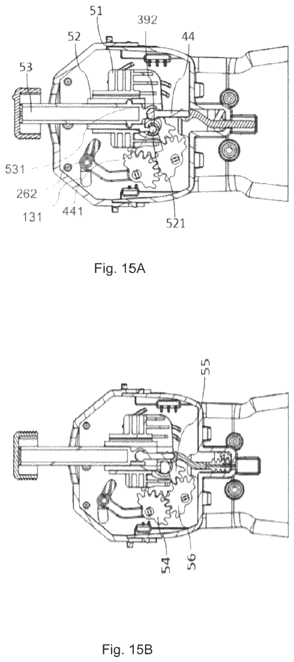

When the dial lever 53 is rotated, the rotary sleeve 52 is driven for rotation, and the perpendicular blades 32, 33, 34, 35, 36, 37 are driven for rotation by the perpendicular blade drive link 39 connected with the rotary sleeve 52; when the dial lever 53 is shifted up and down in the vertical direction, the up-down toggle sleeve 51 is driven for rotation, and the vertical drum connecting gear 55 is driven by the horizontal blade drive gear 54 connected with the up-down toggle sleeve 51, while the perpendicular blade drum 31 and the horizontal blades 22, 23 and 24 are driven for rotation. The cooperation of the ball socket 392 of the perpendicular blade drive link 39 with the ball head 521 of the rotary sleeve 52 prevents the perpendicular blades 32, 33, 34, 35, 36, 37 from shifting up and down. However, the cooperation of the ball head 441 of the air door drive link 44 with the ball socket 531 of the up-down dial lever 53 (see FIGURES 15A-15B) makes the first air door 41 and the second air door 42 unaffected by the rotation and up-down toggling of the dial lever 53.

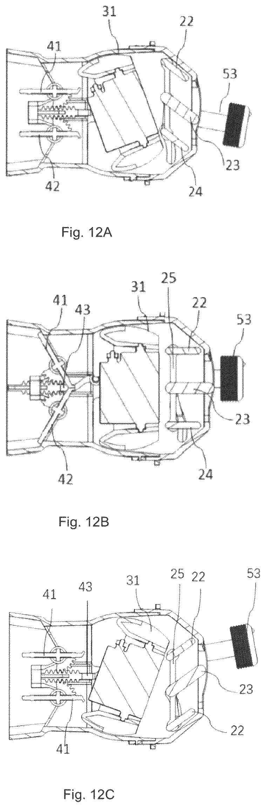

As shown in FIGURE 3B, when the dial lever 53 is in an initial position, the horizontal blades 22, 23, 24 are in the horizontal position, and only one horizontal blade 23 can be seen by passengers; as shown in FIGURE 12B, the perpendicular blade drum 31 does not rotate, and the first air door 41 and the second air door 42 are in a closed state; as shown in FIGURE 13B, the perpendicular blades 32, 33, 34, 35, 36, 37 are in an initial position; as shown in FIGURE 14B, the shaft 262 of the horizontal blade drive link 26 is in an intermediate position of the first slide groove 131.

As shown in FIGURE 15B, when the dial lever 53 is pulled outwards, the movement of the air door tooth bar 43 is driven for movement by the air door drive link 44 connected with the dial lever 53, and then the counterclockwise rotation of the first air door 41 and the clockwise opening of the second air door 42 are controlled by the engagement of the upper tooth bar 431 and the lower tooth bar 432 positioned on the air door tooth bar 43 with the first gear 411 and the second gear 421 positioned on the first air door 41 and the second air door 42, respectively. The unplugging stroke of the dial lever 53 is freely adjustable to control the opening degrees of the first air door 41 and the second air door 42. As shown in FIGURE 14C, when the dial lever 53 is shifted downwards, the up-down toggle sleeve 51 is driven to rotate counterclockwise, and the horizontal blade drive gear 54 is rotated clockwise, so that the shaft 262 moves from a middle position to a high position in the first slide groove 131, and the horizontal blades 22, 23, 24 are deflected upwards around the left-side shaft 27 and the right-side shaft 28 to realize downward inclination of the horizontal blades 22, 23, 24 with respect to the horizontal position. The passengers can see the horizontal blades 23, 24. Meanwhile, the horizontal blade drive gear 54 drives the vertical drum connecting gear 55 to rotate clockwise by the vertical drum conversion gear 56, and then drives the perpendicular blade drum 31 to incline upwards relative to the horizontal position. Therefore, the downward blowing effect of the air outlet can be realized. On the contrary, when the dial lever 53 is shifted upwards, as shown in FIGURE 14A, the up-down toggle sleeve 51 is driven to rotate clockwise, and the horizontal blade drive gear 54 rotates counterclockwise, so that the shaft 262 moves from the middle position to the low position in the first slide groove 131, and the horizontal blades 22, 23, 24 deflect downwards about the left-side shaft 27 and the right-side shaft 28 to incline the horizontal blades 22, 23, 24 upwards with respect to the horizontal position. The passengers can see the horizontal blades 22, 23. Meanwhile, the horizontal blade drive gear 54 drives the vertical drum connecting gear 55 to rotate counterclockwise by the vertical drum conversion gear 56, and then drives the perpendicular blade drum 31 to incline downwards relative to the horizontal position. Therefore, the upward blowing effect of the air outlet can be realized.

As shown in FIGURE 13C, when the dial lever 53 is rotated clockwise, the ball head 521 positioned on the rotary sleeve 52 is driven to rotate clockwise, and the perpendicular blade linkage link 38 is driven to move leftwards by the cooperation of the ball head 521 and the ball socket 392, so that the perpendicular blades 32, 33, 34, 35, 36, 37 swing rightwards. On the contrary, as shown in FIGURE 13A, when the dial lever 53 is rotated counterclockwise, the ball head 521 positioned on the rotary sleeve 52 is driven to rotate counterclockwise, and the perpendicular blade linkage link 38 is driven to move rightwards by the cooperation of the ball head 521 and the ball socket 392, so that the perpendicular blades 32, 33, 34, 35, 36, 37 swing leftwards.

### 2. Embodiment 2

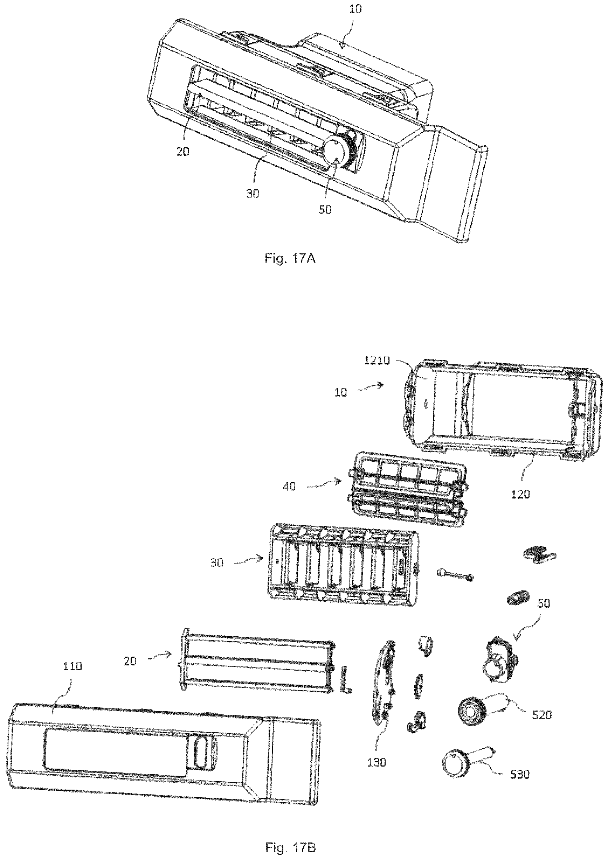

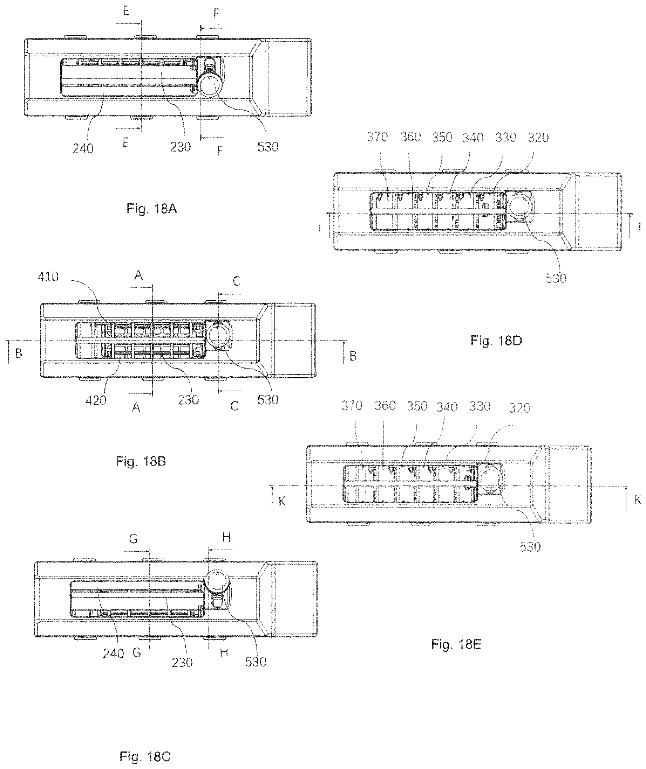

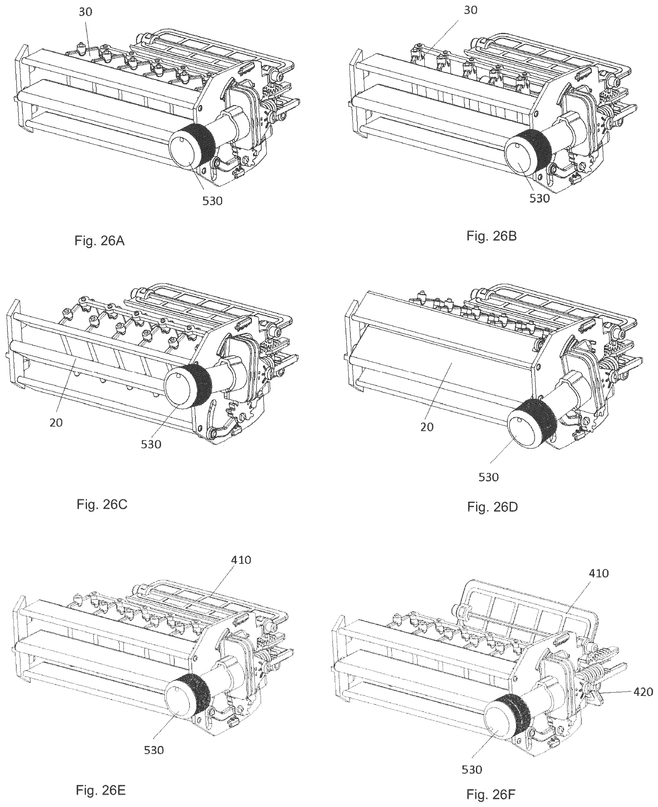

As shown in FIGURES 17A to 17B, the air outlet structure according to the present invention includes a housing 10, a horizontal blade assembly 20, a perpendicular blade assembly 30, an air door assembly 40, and a dial lever assembly 50, wherein the horizontal blade assembly 20 is installed at the front end of the housing 10, the perpendicular blade assembly 30 is installed at the middle of the housing 10, and the air door assembly 40 is installed at the rear end of the housing 10; a dial lever assembly 50 is mounted to the housing 10 on the sides of the horizontal blade assembly 20 and the perpendicular blade assembly 30, and includes an air door dial lever 53 and a blade dial lever 520 sleeved on the air door dial lever 530, and the up-down toggle of the air door dial lever 530 or the blade dial lever 520 may drive rotation of the horizontal blades of the horizontal blade assembly 20 (as shown in FIGURES 18A-18C and FIGURES 26C-26D); and the rotation of the blade dial lever 520 may drive rotation of the perpendicular blades of the perpendicular blade assembly 30 (as shown in FIGURES 18D-18E and FIGURES 26A-26B), and the rotation of the air door dial lever 530 may drive the opening and closing of the air door of the air door assembly 40 (as shown in FIGURES 26E-26F).

The housing 10 includes a front half-housing 110 and a rear half-housing 120, which are relatively fixed, e.g. by means of a circumferential snap, and define a receiving cavity for receiving the horizontal blade assembly 20, the perpendicular blade assembly 30, the air door assembly 40, and at least a portion of the dial lever assembly 50. In this embodiment, the housing 10 further includes a partition wall 130 fixedly provided between the front half-housing 110 and the rear half-housing 120 and dividing the receiving cavity into a left cavity in which the horizontal blade assembly 20 and the perpendicular blade assembly 30 are received and a right cavity in which at least part of the dial lever assembly 50 is received.

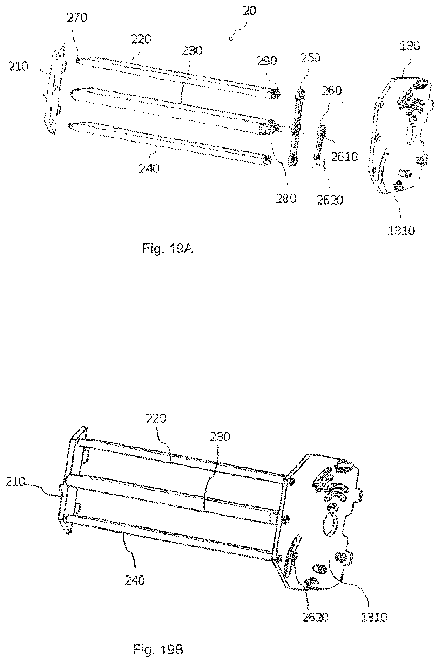

As shown in FIGURES 19A-19B, the horizontal blade assembly 20 includes a horizontal blade support 210 and a plurality of horizontal blades 220, 230, 240, each of the horizontal blades 220, 230, 240 includes a left-side shaft 270 on the left side and a right-side shaft 280 and a link shaft 290 on the right side. The left-side shaft 270 and the right-side shaft 280 are coaxial and closer to the outer side of the air outlet opening than the link shaft 290. The left-side shaft 270 of the horizontal blades 220, 230, 240 is fitted to the horizontal blade support 210 fixed to the housing 10, and the right-side shaft 280 is fitted to the partition wall 130. In addition, the horizontal blade assembly 20 further includes a horizontal blade linkage link 250 that is simultaneously fitted to the link shaft 290 of the horizontal blades 220, 230, 240 to effect linkage of the three horizontal blades 220, 230, 240 (see FIGURES 18A-18C and 26C-26D). In addition, the horizontal blade assembly 20 further includes a horizontal blade drive link 260, one end of which is provided with a hole 2610 for fitting to the link shaft 290 of the horizontal blade 230 passing through the horizontal blade linkage link 250; the other end thereof is provided with a shaft 2620 which passes through a first slide groove 1310 of the partition wall 130 and is fitted to the dial lever assembly 50 (see FIGURE 19B), where by the rotation of the horizontal blades 220, 230, 240 is driven by the dial lever assembly 50.

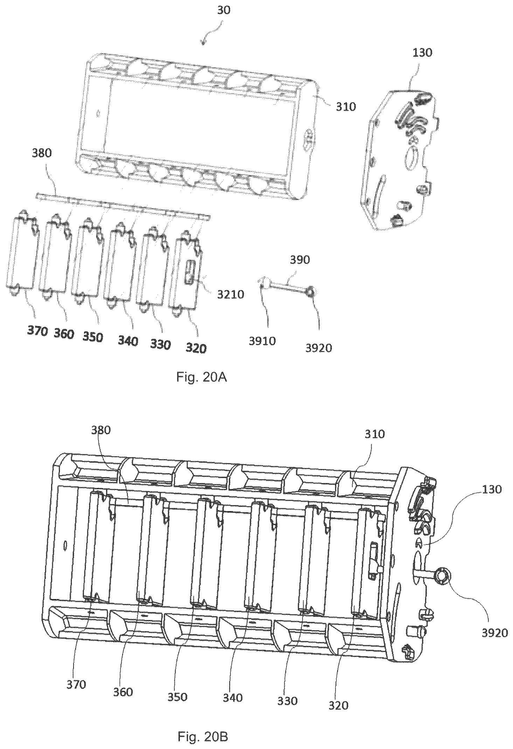

As shown in FIGURES 20A-20B, the perpendicular blade assembly 30 includes a perpendicular blade drum 310 and a plurality of perpendicular blades 320, 330, 340, 350, 360, 370, the perpendicular blade drum 310 has a left-side shaft fitted to a left side wall 1210 (see FIGURE 17B) of the rear half-housing 120, and a right-side shaft fitted to the partition wall 130, and both ends of the perpendicular blades 320, 330, 340, 350, 360, 370 are shaft-fitted to the perpendicular blade drum 310. In addition, the perpendicular blade assembly 30 also includes a perpendicular blade linkage link 380 that is simultaneously connected with perpendicular blades 320, 330, 340, 350, 360, 370 to effect linkage of the six perpendicular blades 320, 330, 340, 350, 360, 370 (see FIGURES 18D-18E and 26A-26B). Moreover, the perpendicular blade assembly 30 further includes a perpendicular blade drive link 390 having a ball socket 3910 at its left end fitted to the ball head 3210 of the closest perpendicular blade 320 such that the perpendicular blade drive link 390 can pull the perpendicular blade 320 or rotate relative to the perpendicular blade 320, and a ball socket 392 at the right end thereof fitted to the dial lever assembly 500 to thereby drive the rotation of the perpendicular blades 320, 330, 340,350, 360, 370 by the dial lever assembly 50.

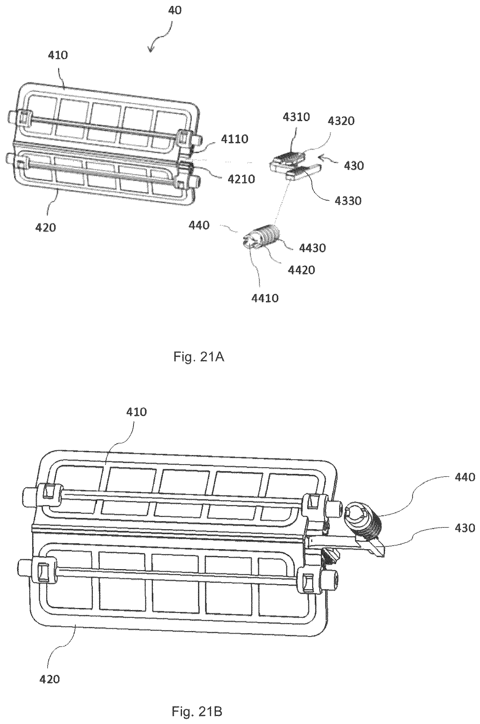

As shown in FIGURES 21 A-21B, the air door assembly 40 includes a first air door 410, a second air door 420 and an air door tooth bar 430, wherein left and right sides of the first and second air doors 410 and 420 are shaft-fitted to side wall of the rear half-housing 120 respectively, the first and second air doors 410 and 420 are pivotably connected and have a first gear 4110 and a second gear 4210 facing each other, respectively, and an air door tooth bar 430 is inserted between the first gear 4110 and the second gear 4210 and has an upper gear tooth bar 4310 and a lower gear tooth bar 4320 oppositely arranged to cooperate therewith so as to rotate the first air door 410 and the second air door 420 by the movement of the air door tooth bar 430 (see FIGURES 26E-26F). Further, the air door assembly 40 further includes an air door worm 440, one end of which is connected with the air door tooth bar 430, and the other end of which is fitted to the dial lever assembly 50, thereby driving the rotation of the first and second air doors 410 and 420 by the dial lever assembly 50.

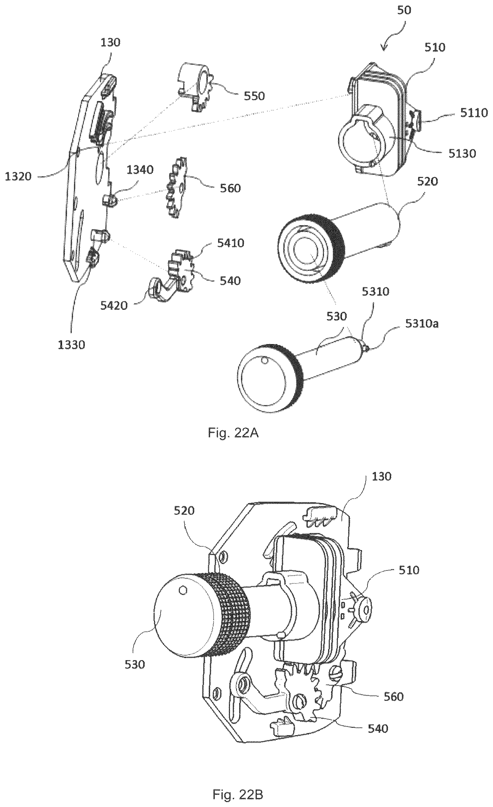

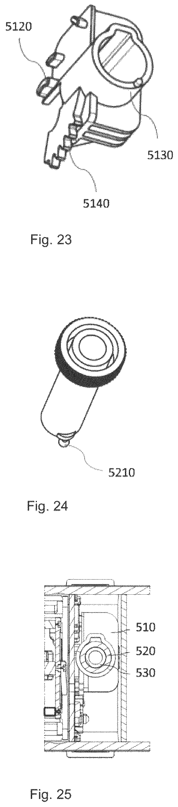

As shown in FIGURES 22A-22B, the dial lever assembly 50 includes an up-down toggle sleeve 510, a blade dial lever 520 and an air door dial lever 530, wherein the right side of the up-down toggle sleeve 510 is connected with the rear half-housing 120 (see FIGURE 17B) by a rotating shaft 5110, and the left side is inserted into the second slide groove 1320 of the partition wall 130 by a pin 5120 (see FIGURE 23) to rotate the up-down toggle sleeve 510 about the rotating shaft 5110. The left end of the up-down toggle sleeve 510 also includes a first tooth 5140 (shown in FIGURE 23). The blade dial lever 520 passes through the sleeve 5130 of the up-down toggle sleeve 510 in the forward and backward directions such that the blade dial lever 520 has only a degree of freedom to rotate relative to the up-down toggle sleeve 510, and the rear end of the blade dial lever 520 has a ball head 5210 (see FIGURE 24) received in a ball socket 3920 at the right end of the perpendicular blade drive link 390 (see FIGURE 20A). Therefore, the rotation of the blade dial lever 520 can drive the movement of the perpendicular blade drive link 390, which in turn causes rotation of the perpendicular blades 320, 330, 340, 350, 360, 370. The air door dial lever 530 passes through the blade dial lever 520 in the front-rear direction and enables the air door dial lever 530 to have only a degree of freedom to rotate relative to the blade dial lever 520 (see figures 22B and 25). Thus, the rotation of the air door dial lever 530 and the rotation of the blade dial lever 520 remain independent (i.e., do not affect each other), and the up-down toggling of the air door dial lever 530 is synchronized with the up-down toggling of the up-down toggle sleeve 510 via the blade dial lever 520. The rear end of the air door dial lever 530 has a ball head 5310 and a protrusion 5310a protruding from the side of the ball head 5310, the ball head 5310 is received in a ball socket 4410 at the front end of the air door worm 440 (see FIGURE 21A) and engaged with a groove 4420 in the ball socket 4410 through a protrusion 5310a, so that the air door dial lever 530 can rotate the air door worm 440 synchronously.

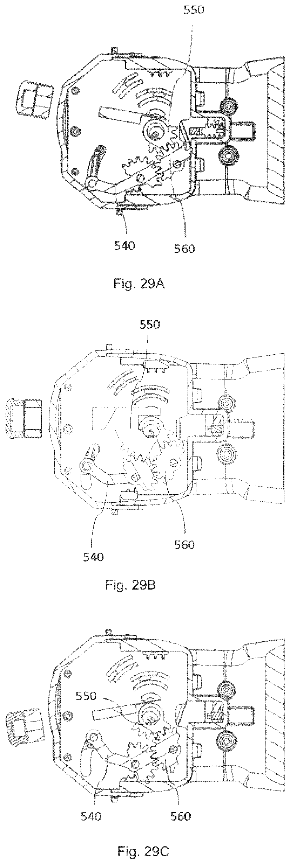

As shown in FIGURE 22A, the dial lever assembly 50 further includes a horizontal blade drive gear 540 rotatably fitted on a corresponding mounting shaft 1330 of the partition wall 130. Specifically, the rear end of the horizontal blade drive gear 540 has a second tooth 5410 (see FIGURE 22A) engaged with the first tooth 5140 on the up-down toggle sleeve 510, the front end of the horizontal blade drive gear 540 has a receiving hole 5420, and the shaft 2620 of the horizontal blade drive link 260 passes through the first slide groove 1310 on the partition wall 130 and inserts into and fits with the receiving hole 5420 (see FIGURE 22B) so as to drive the rotation of the horizontal blade drive gear 540 by the up-down toggle of the up-down toggle sleeve 510, and then transmit the motion to the horizontal blade linkage link 250 through the shaft 2620 of the horizontal blade drive link 260, thereby driving the rotation of the horizontal blades 220, 230, 240. The dial lever assembly 50 further includes a vertical drum connecting gear 550 connected with the perpendicular blade drum 310 (see FIGURES 20A and 22A) by the partition wall 130, and a vertical drum conversion gear 560 rotatably fitted to a corresponding mounting shaft 1340 of the partition wall 130; the vertical drum conversion gear 560 is engaged with the second tooth 5410 of the horizontal blade drive gear 540, and the vertical drum connecting gear 550 is engaged with the vertical drum conversion gear 560 (see FIGURES 22A and 29A-29 C), so that the rotation of the vertical drum conversion gear 560, the rotation of the vertical drum connecting gear 550, and finally the rotation of the perpendicular blade drum 310 can be driven by the rotation of the horizontal blade drive gear 540. In particular, by the arrangement of the vertical drum conversion gear 560, the rotation direction of the perpendicular blade drum 310 is opposite to the rotation direction of the horizontal blades 220, 230, 240.

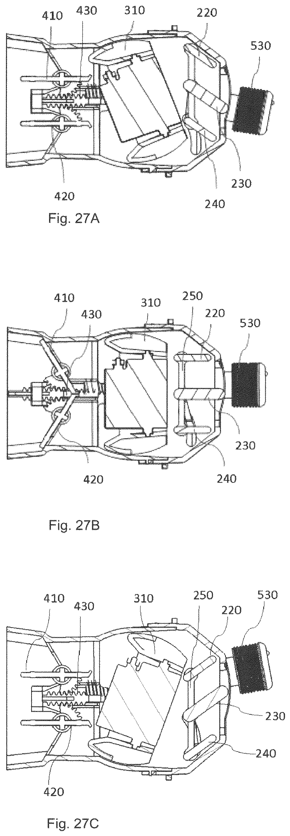

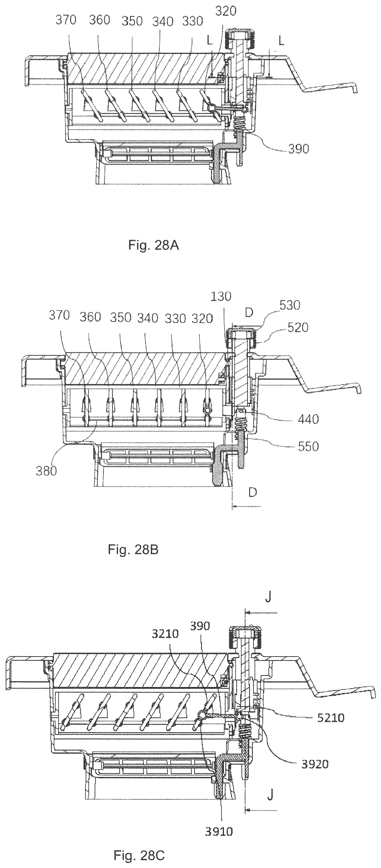

As shown in FIGURE 27B, when the air door dial lever 530 and the blade dial lever 520 are in initial positions and the horizontal blades 220, 230, 240 are in horizontal positions, passengers can only see the horizontal blades 230; the perpendicular blade drum 310 does not rotate, and the first air door 410 and the second air door 420 are in a closed state; the perpendicular blades 320, 330, 340, 350, 360, 370 are in initial positions, as shown in FIGURE 28B; and the shaft 2620 of the horizontal blade drive link 260 is in an intermediate position of the first slide groove 1310, as shown in FIGURE 29B.

As shown in FIGURE 26E, when the air door dial lever 530 is rotated rightwards, and the air door dial lever 530 rotates the air door worm 440 clockwise, so that threads 4430 on the air door worm 440 cooperate with the tooth 4330 on the air door tooth bar 430 to move the air door tooth bar 430 forward (see FIGURE 21A). The first air door 410 is then controlled to rotate counterclockwise and the second air door 420 is opened clockwise by engagement of the upper and lower tooth bars 4310 and 4320 on the air door tooth bar 430 with the first and second gears 4110 and 4210 on the first and second air doors 410 and 420, respectively. The rotational stroke of the air door dial lever 530 is freely adjustable to control the opening degrees of the first air door 410 and the second air door 420. As shown in FIGURE 27A, when the air door dial lever 530 or the blade dial lever 520 is shifted downwards, the up-down toggle sleeve 510 is driven to rotate counterclockwise, and the horizontal blade drive gear 540 is rotated clockwise, so that the shaft 2620 moves from a middle position to a high position in the first slide groove 1310, the horizontal blades 220, 230, 240 are deflected upwards about the left-side shaft 270 and the right-side shaft 280 to realize downward inclination of the horizontal blades 220, 230, 240 with respect to the horizontal position. The passengers can see the horizontal blades 230, 240. Meanwhile, the horizontal blade drive gear 540 drives the vertical drum connecting gear 550 to rotate clockwise by the vertical drum conversion gear 560, and then drives the perpendicular blade drum 310 to incline upwards relative to the horizontal position (see FIGURE 26D). Therefore, the downward blowing effect of the air outlet can be realized. On the contrary, when the dial lever 530 or the blade dial lever 520 is shifted upwards, as shown in FIGURE 27B, the up-down toggle sleeve 510 is driven to rotate clockwise, and the horizontal blade drive gear 540 is rotated counterclockwise, so that the shaft 2620 is moved from the middle position to the low position in the first slide groove 1310, and the horizontal blades 220, 230, 240 are deflected downwards about the left-side shaft 270 and the right-side shaft 280 to incline the horizontal blades 220, 230, 240 upwards with respect to the horizontal position. The passenger can see the horizontal blades 220, 230. Meanwhile, the horizontal blade drive gear 540 drives the vertical drum connecting gear 550 to rotate counterclockwise by the vertical drum conversion gear 560, and then drives the perpendicular blade drum 310 to incline downwards relative to the horizontal position (see FIGURE 26C). Therefore, the upward blowing effect of the air outlet can be realized.

As shown in FIGURE 28C, by rotating the blade dial lever 520 to the right, the blade dial lever 520 moves rightwards the perpendicular blade drive link 390 by the combination of the ball head 5210 and the ball socket 3920 on the perpendicular blade drive link 390, which in turn swings rightwards the perpendicular blades 320, 330, 340, 350, 360, 370. Conversely, as shown in FIGURE 28A, by rotating the blade dial lever 520 to the left, the blade dial lever 520 moves leftwards the perpendicular blade drive link 390 by the combination of the ball head 5210 and the ball socket 3920 on the perpendicular blade drive link 390, which in turn moves leftwards the perpendicular blades 320, 330, 340, 350, 360, 370.

The above mentioned are only preferred embodiments of the present invention, and are not intended to limit the scope of the present invention. Various changes can be made to the above-mentioned embodiments of the present invention. For example, the placement positions of the paired ball head and ball socket in the above-described embodiments of the present invention may be exchanged for each other without affecting product functionality. That is to say, all simple and equivalent changes and modifications made in accordance with the claims of the present invention and the content of the description fall into the protection scope of claims of the patent for invention. The content without being described in detail in the invention is conventional technical content.

## Claims

1. An air outlet structure providing a channel for air flow, comprising:
(a) a housing;
(b) a vertical guide configured to guide the air flow;
(c) a horizontal guide configured to guide the air flow; and
(d) a dial lever assembly configured to move the vertical guide and the horizontal guide;
wherein the dial lever assembly is configured to move the vertical guide between left and right positions;
wherein the dial lever assembly is configured to move the horizontal guide between upper and lower positions;
wherein the dial lever assembly is configured to (1) move the horizontal guide by rotating relative to the housing about a first axis parallel to an extension direction of the horizontal guide, and (2) move the vertical guide by rotating relative to the housing about a second axis perpendicular to both the extension direction of the horizontal guide and the extension direction of the vertical guide.

2. The air outlet structure of Claim 1 further comprising an air door configured to move between a closed position closing the channel and an open position allowing the air flow therethrough.

3. The air outlet structure of Claim 2 wherein the dial lever assembly is configured such that the horizontal guide and the vertical guide are configured to remain in a position relative to the housing when the air door moves between the closed position and the open position.

4. The air outlet structure of Claim 3 wherein the dial lever assembly is configured to translate in the direction of the second axis relative to the housing so as to move the air door between the closed position and the open position.

5. The air outlet structure of Claim 3 wherein the dial lever assembly comprises a blade dial lever configured to move the vertical guide by rotating about the second axis relative to the housing and an air door dial lever configured to move the air door by rotating about the second axis relative to the housing.

6. The air outlet structure of Claim 1 wherein the vertical guide is configured as one of front and rear rows of blades, wherein the horizontal guide is configured as the other one of the front and rear rows of blades.

7. The air outlet structure of Claim 6 wherein the dial lever assembly comprises an up-down toggle sleeve and a rotary sleeve, wherein the up-down toggle sleeve is rotatably mounted on the housing about a first direction, and one of the front and rear rows of blades is connected with the up-down toggle sleeve; and the rotary sleeve is rotatable about a second direction relative to the up-down toggle sleeve, the second direction is perpendicular to the first direction, and the other one of the front and rear rows of blades is connected with the rotary sleeve.

8. The air outlet structure of Claim 7 wherein the rotary sleeve passes through the up-down toggle sleeve and has only a degree of freedom to rotate about the second direction relative to the up-down toggle sleeve.

9. The air outlet structure of Claim 7 wherein one of the front and rear rows of blades is connected with the up-down toggle sleeve by a first blade drive gear, one of the front and rear rows of blade assemblies has a first blade drive link with a shaft, and one end of the first blade drive gear is connected with the shaft; and the up-down toggle sleeve has a first tooth, and the other end of the first blade drive gear is engaged with the first tooth.

10. The air outlet structure of Claim 7 wherein the other one of the front and rear rows of blades is connected with the rotary sleeve by a ball socket structure, and the other one of the front and rear rows of blade assemblies is provided with a second blade drive link; the second blade drive link has a ball socket, and the rotary sleeve has a ball head; alternatively, the second blade drive link has a ball head, and the rotary sleeve has a ball socket; and the ball head is received in the ball socket.

11. The air outlet structure of Claim 7 wherein the air outlet structure further comprises an air door controlled by plugging and unplugging the dial lever assembly.

12. The air outlet structure of Claim 11 wherein the dial lever assembly further comprises a dial lever connected with the air door by passing through the rotary sleeve.

13. The air outlet structure of Claim 7 wherein the dial lever has only a degree of freedom to move in the second direction relative to the rotary sleeve.

14. The air outlet structure of Claim 13 wherein the wall surface of the rotary sleeve is provided with an opening groove extending forwards and backwards, and the dial lever has a pin which is movable in the opening groove.

15. The air outlet structure of Claim 6 wherein the dial lever assembly comprises an up-down toggle sleeve rotatably mounted on the housing about a first direction, and one of the front and rear rows of blades is connected with the up-down toggle sleeve; the blade dial lever is rotatable about a second direction relative to the up-down toggle sleeve, the second direction is perpendicular to the first direction, and the other one of the front and rear rows of blades is connected to the blade dial lever.

16. The air outlet structure of Claim 15 wherein the blade dial lever passes through the up-down toggle sleeve and has only a degree of freedom to rotate relative to the up-down toggle sleeve.

17. The air outlet structure of Claim 15 wherein one of the front and rear rows of blades has a first blade drive link and is connected with the up-down toggle sleeves by a first blade drive gear, and the first blade drive link has a shaft with which one end of the first blade drive gear is connected; and the up-down toggle sleeve has a first tooth, and the other end of the first blade drive gear is engaged with the first tooth.

18. The air outlet structure of Claim 15 wherein the other one of the front and rear rows of blades has a second blade drive link and is connected with the blade dial lever by a ball socket structure; the second blade drive link has a ball socket, and the blade dial lever has a ball head; alternatively, the second blade drive link has a ball head, and the blade dial lever has a ball socket; and the ball head is received in the ball socket.

19. The air outlet structure of Claim 15 wherein the air outlet structure comprises an air door, the dial lever assembly comprises an air door dial lever inserted into the blade dial lever, and the air door is controlled by rotating the air door dial lever.

20. The air outlet structure of Claim 19 wherein the air door dial lever has only a degree of freedom to rotate relative to the blade dial lever.

21. The air outlet structure of Claim 19 wherein the air door dial lever is connected with the air door by a worm.

22. The air outlet structure of Claim 2 wherein one of the air door dial lever and the worm is provided with a ball socket, the other one is provided with a ball head, and a convex point on the ball head is matched with a groove on the ball socket, so that the air door dial lever drives the rotation of the worm.
